(19) Europäisches Patentamt
European Patent Office
Office européen des brevets

(11) **EP 3 038 003 B1**

## (12) EUROPEAN PATENT SPECIFICATION

(45) Date of publication and mention
of the grant of the patent:
**19.08.2020  Bulletin 2020/34**

(21) Application number: **14307149.6**

(22) Date of filing: **22.12.2014**

(51) Int Cl.:
**G06F 21/52** *(2013.01)*  **G06F 21/55** *(2013.01)*
**G06F 21/56** *(2013.01)*  **G06F 21/78** *(2013.01)*

### (54) METHOD FOR PROTECTION AGAINST RANSOMWARE

VERFAHREN ZUM SCHUTZ GEGEN RANSOMWARE

PROCÉDÉ DE PROTECTION CONTRE LES RANSOMWARES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**29.06.2016  Bulletin 2016/26**

(73) Proprietor: **Alcatel Lucent
91620 Nozay (FR)**

(72) Inventors:
  • **Martin, Antony
91620 Nozay (FR)**
  • **El-Abed, Haithem
91620 Nozay (FR)**

(74) Representative: **Novagraaf Technologies
Bâtiment O2
2, rue Sarah Bernhardt
CS90017
92665 Asnières-sur-Seine Cedex (FR)**

(56) References cited:
  • **FELIX GRÄBERT ET AL: "Automated
Identification of Cryptographic Primitives in
Binary Programs", 1 January 2011 (2011-01-01),
RECENT ADVANCES IN INTRUSION DETECTION,
SPRINGER BERLIN HEIDELBERG, BERLIN,
HEIDELBERG, PAGE(S) 41 - 60, XP019172940,
ISBN: 978-3-642-23643-3 * page 41 - page 59 ***

  • **Brian Kaplan ET AL: "RAM is Key Extracting Disk
Encryption Keys From Volatile Memory", , 31 May
2007 (2007-05-31), XP055084756, Carnegie
Mellon University Retrieved from the Internet:
URL:http://cryptome.org/0003/RAMisKey.pdf
[retrieved on 2013-10-21]**
  • **Anonymous: "Entropy (information theory)",
Wikipedia, the free encyclopedia, 3 December
2014 (2014-12-03), XP055183574, Retrieved from
the Internet:
URL:http://en.wikipedia.org/w/index.php?ti
tle=Entropy_(information_theory)&oldid=636
452714 [retrieved on 2015-04-16]**
  • **Anand Ajjan: "Ransomware: Next-Generation
Fake Antivirus", A SophosLabs technical paper
-February 2013, 26 February 2013 (2013-02-26),
XP055182295, Retrieved from the Internet:
URL:http://www.sophos.com/en-us/medialibra
ry/PDFs/technical
papers/SophosRansomwareFakeAntivirus.pdf?l
a=en.pdf?dl=true [retrieved on 2015-04-10]**
  • **ROBERT LYDA ET AL: "Using Entropy Analysis
to Find Encrypted and Packed Malware",
SECURITY & PRIVACY, IEEE, IEEE SERVICE
CENTER, LOS ALAMITOS, CA, US, vol. 5, no. 2, 1
March 2007 (2007-03-01), pages 40-45,
XP011175986, ISSN: 1540-7993**
  • **Anonymous: "Finding (unknown) malware with
DensityScout", SANS Digital Forensics and
Incident Response Blog, 26 April 2012
(2012-04-26), XP055182299, Retrieved from the
Internet:
URL:http://digital-forensics.sans.org/blog
/2012/04/26/finding-unknown-malware-with-d
ensityscout [retrieved on 2015-04-10]**

**Description**

FIELD OF THE INVENTION

The invention relates to a method for real time protection against unsolicited encryption of computer files in a computer system, and in particular to a method for detecting and blocking so-called ransomware in a computer system. Ransomware refers to malware or malicious software that prevents normal user interaction with the computer system.

The invention also concerns a system for real time protection against unsolicited encryption of computer files in a computer system, and in particular for protection against ransomware in a computer system, a computer program comprising instructions for performing the method and a computer readable medium having loaded thereupon such computer program.

BACKGROUND OF THE INVENTION

Malicious computer software or so-called malware, such as viruses, computer worms and Trojans, present one of the most significant computer security issues. In recent years, a new type of malicious software, called ransomware, has become widespread. The term ransomware as used herein refers to a family of malicious processes or programs that block or impede user interaction with the operating system of a computing device such as a computer, a networked computer, an element of a computer network, a smartphone, a tablet or other similar devices. Oftentimes, these programs demand the transfer of funds to the offenders in exchange for restoration of the computer's operability. Generally, the ransomware interferes with an operating system so as to make a computer system unresponsive to user input, but other mechanisms can exist. Ransomware processes can be downloaded to computers through sites offering free software, file sharing sites and hacked legitimate web resources. Often, users download and run malicious programs voluntarily, believing that they are installing legitimate software.

An example of a sequence of typical actions taken by a malicious ransomware process is as follows. Once admitted into the system the malicious program, in order to establish itself in the system, creates a file, for example an .exe file and writes it into the operating system's autorun. Then, the malicious program disables the operating system's task manager and the possibility of booting the system in safe mode. This is done in order to complicate the user's resistance against the ransomware process by blocking the user's interaction with the operating system. This is followed by the actual mission of the ransomware program. A typical example would operate as follows: after the malicious program has blocked the user's interaction with the operating system, it displays, typically over all windows, a window with a message that the computer is locked, with a purported instruction for unlocking it. In the instruction, offenders, under various pretexts, demand that the user pays for the encryption key or keys, and tell the user how he or she will receive the codes to be able to unlock the computer or computing device after the payment.

Technically, ransomware processes infect target computer systems using techniques such as attaching the above executable files to emails and then running the executable file at the next system boot, typically then scanning the system to look for vulnerabilities, or, alternatively, attacking a vulnerability in a network service to gain access to a target computer system.

Ransomware, once installed, is designed to encrypt a user's files and request a ransom for the files to be unencrypted. Well-known cryptoransomware are for instance *Cryptolocker* which encrypts a victim's documents and demands payment in return for the encryption key.

Overall, once the data has been encrypted, there is no easy solution to get it back.

In order to combat ransomware, security companies, security professionals and ethical hackers have traditionally used basic signature detection methodology, which is based on the comparison of program codes with signatures of known malicious programs stored in antivirus databases. For their part, users are advised to have 1) an up-to-date antivirus implemented in 2) an up-to-date operating system, the user having taken the precaution of 3) making regular data backups. Nevertheless, the operational limitations of updating and patching systems mean that vulnerabilities do still exist such as zero-day attacks that exploit a previously unknown vulnerability in an application or operating system and for which a programmer has had zero days to fix the flaw - i.e. there is no patch available and which fundamentally defeat the first two solutions; the third solution is expensive and not real-time compatible.

Depending on each ransomware, some may be possible to crack but this is an opportunistic and not long-term solution against ransomware.

Generally speaking, existing techniques are just trying to identify ransomware - whatever their encryption be - to delete them. In addition, these existing techniques are failing more and more to detect and block ransomware for multiple reasons: end-users are highly entitled to click on links that install ransomware, and even with an up-to-date antivirus, advanced threats such as advanced persistent threats are bypassing the antivirus and finally zero day vulnerabilities are all over the place and of course are currently undetected. Given this context, with existing techniques, data gets encrypted and meaningless in the absence of the encryption key and therefore lost for the end-user. E.g., document (Automated Identification of Cryptographic Primitives in Binary Programs. Gröbert F. et al., In: Recent Advances in Intrusion Detection. (RAID 2011), Lecture Notes in Computer Science, vol 6961Spinger) constitutes one such relevant prior art.

Prior art techniques may consequently be unable to detect an unknown ransomware process, resulting in a blockage of the user's interaction with the operating system, and consequently, a blockage of the user's access to his or her antivirus tools. Therefore, there is a need for limiting and tackling ransomware quickly, so that the relevant process cannot finish running. More particularly, there is need for a solution which does not require frequent updates that would always be too late and partial (with, implicitly, no coverage of zero day vulnerability).

SUMMARY OF THE INVENTION

The object of the present invention is to alleviate at least partly the above mentioned drawbacks, notably by preventing in real-time unsolicited encryption of computer files, limiting and tackling ransomware despite polymorphism and other evasion techniques the ransomware may be using to defeat antiviruses defenses. Once the suspicious process has been flagged, an automatic attempt to key recovery is performed. A further object of the present invention consists in relieving ransomware protection from the cumbersome task of updating of elements such as signatures in antivirus software. The present invention is defined in the appended independent claims.

In a first aspect, this aim is achieved with a method for real time protection against unsolicited encryption of computer files in a computer system, the method comprising the following steps:

- monitoring each access of a running process to a file of a file system of the computer system, said file being in a first state in which said file is accessed as input by the process and in a second state in which said file is processed by the process as output, the first state of the file of said file system being associated with a first set of data values and the second state of the file of the file system being associated with a second set of data values,
- measuring, while said data values are still in volatile memory, a first magnitude representative of the randomness of said first set of data values and a second magnitude representative of the randomness of said second set of data values,
- comparing said first magnitude and said second magnitude,
- interrupting said process if said second magnitude exceeds said first magnitude by a given threshold value
- requesting to an end-user an explicit acknowledgement of the legitimacy or not of the encryption,
- if the encryption is not legitimate, automatically dumping the volatile memory data looking for respectively indices of crypto algorithm used and encryption keys in the volatile memory using the pattern of key schedules; then storing of the indices and encryption keys.

Preferably, the unsolicited encryption of computer files in the computer system is a result of ransomware operating in said computer system.

A second aspect of the invention provides a computer program product comprising computer-executable instructions for performing a method according to any of the embodiments herein mentioned.

A third aspect of the invention provides a computer readable medium having recorded thereon a computer program comprising program instructions, the computer program being loadable into a data-processing unit and adapted to cause execution of the method according to any of the embodiments herein mentioned when the computer program is run by the data-processing unit.

A fourth aspect of the invention provides a system for real time protection against unsolicited encryption of computer files in a computer system, said system comprising computing hardware, an operating system executable on the computing hardware and comprising modules stored on a computer readable medium comprising:

- a first module for monitoring an access of a running process to a file of a file system, said file of a file system being adapted to be in a first state in which said file is accessed as input by a process (A) and in a second state in which said file is processed by the process (A) as output, the first state of the file of the file system being associated with a first set of data values and the second state of the file of the file system being associated with a second set of data values,
- a second module for measuring a first magnitude representative of the randomness of said first set of data values and a second magnitude representative of the randomness of said second set of data values,
- a third module for comparing said first magnitude and said second magnitude,
- a fourth module for interrupting said process if said second magnitude exceeds said first magnitude by a given threshold value. The dependent claims define various embodiments of the invention.

Further features and advantages of the invention will appear from the following description of embodiments of the invention, given as nonlimiting examples, with reference to the accompanying drawings listed hereunder.

BRIEF DESCRIPTION OF THE DRAWING

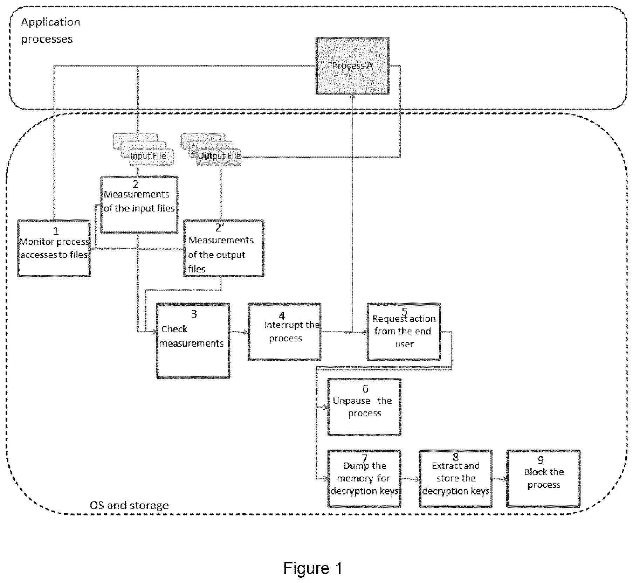

Fig. 1 represents a flowchart of an embodiment of the proposed method and system.

DETAILED DESCRIPTION OF THE INVENTION

Aspects of the invention are directed to real time protection against unsolicited encryption of computer files in a computer system, notably by providing protection against ransomware. Ransomware is defined herein as malicious software that encrypts the user's files and optionally requests a ransom for the files to be unencrypted.

It is clear that if antivirus security modules do not detect a ransomware process, infection of the operating system will achieve the intended result of blockage of the user's interaction with the operating system, and, consequently, the impossibility to access antivirus product modules from the user's side. As said, the invention aims at detecting, limiting and tackling ransomware quickly, so that a ransomware process cannot finish running.

Figure 1 illustrates an example of an embodiment of part of a computer system incorporating protection against malware intended to perform unsolicited encryption of computer files in a computer system, particularly resulting from execution of ransomware. The computer system comprises computing hardware, and an operating system executable on the computing hardware. In the top part of the figure, one of a number of application processes, here the process identified as process A associated with applications such as Apache® Web server, Microsoft Outlook® or any other application is in the process of being handled by an operating system (OS) which also handles storage, such as Linux®, Android®, Apple iOS®, Mac OS®, Microsoft Windows®. That part of the OS which is enriched with a certain number of modules which execute in real-time and perform the method according to the invention is shown in the bottom portion of the Figure.

Four of these modules will now be discussed. The system for protection against malware, particularly ransomware comprises a first module 1 for monitoring each call that a running process makes to a file of the computer system. The first module 1 monitors an access of a running process A each time a file of the file system is accessed. In other words, the first module 1 monitors if a process A is opening files. Monitoring is performed per process and per file identifier. In the Linux operating system, this would be per inode (an inode stores metadata information about a file, including information about where the data is located but not the data itself). Advantageously, monitoring includes gathering information from the file identifier, such as when the file was last modified.

In the example, the operating system is handling processes linked with an application such as Apache® Web Server or Microsoft Outlook®. The figure also shows a second module 2 for measuring randomness (explained below) of a plurality of sets of data values, a third module 3 for comparing the plurality of sets of data values and a fourth module 4 for interrupting the results of the comparison. These modules 2,3,4 may be implemented in software and hardware components.

More specifically, the file of the file system to which access is being made by the operating system has two states: a first state in which said file is accessed as input by the process A and in a second state in which file is processed by the process as output. Each of the first and second state are respectively associated with a first set of data values and a second set of data values. Typically, the first set of data is a chunk of data read and the second set of data is a chunk of data read and written. It should be borne in mind that at this point that the file content is still in volatile memory such as DRAM memory, i.e. the file content has not yet been written to non-volatile memory, particularly to disk. If process A is part of a ransomware encryption program and is in the process of encrypting or otherwise modifying the data, the invention sets out to detect this fact and to prevent the modified data being written to non-volatile memory. Once the content of a file which has been encrypted or otherwise modified by the ransomware is allowed to leave the volatile memory to reach non-volatile memory, it is too late; without knowledge of the key, the maliciously encrypted data cannot be un-encrypted.

Typically, the first state of the file of the file system corresponds to the first set of data from which the process A reads and the second state of the file of the file system corresponds to the second set of data which are written by the process A.

Preferably, the monitoring of the access of the running process A to the file of the file system through the first module 1 is updated so as to receive constantly changing data relative to the access of the process A to the file of the file system or a to a second file system. In other words, the monitoring of first module 1 is real-time compatible. Indeed, it is important to detect the ransomware process A while it is running in order to be able to prevent the encryption process associated therewith from blocking or impeding user interaction with the operating system. As said, if ransomware process A is running and the content of a file is allowed to leave the volatile memory to reach non-volatile memory, it is too late.

According to an embodiment, the second module 2 measures a first magnitude representative of the randomness of the first set of data values and a second magnitude representative of the randomness of the second set of data values. Alternatively, said first magnitude and said second magnitude can be measured via two distinct modules 2,2' (illustrated in figure 1).

Degree of randomness is conventionally measured by entropy. There are various definitions of entropy in this context, and various ways of measuring it.

Entropy is a measure of how predictable data is. The value of entropy for a byte will lie between 0 and 8. The closer the value of entropy to 8 is, the higher the entropy is. In other words, the closer the value of entropy to 8 is, the higher the randomness is. To take the example of one method of measurement, for an 8-bit byte and if each bit can have a random value of 0 or 1 and nothing is known about what sequence these will follow, then the entropy of this byte will be 8. If it is known that the byte will always start with a "1" and end with a sequence "100", then only 4 bits of the byte will be random, the other 4 being known, and the byte will have an entropy of 4.

Another way of measuring entropy is to use an approximation described by Shamir and van Someren, in "Playing hide and seek with stored keys", in: Financial Cryptography (1998) which is based on the assumption that encryption keys must have high entropy, otherwise they could be guessed easily, and data which is being operated on or has been operated on by encryption keys will also show high entropy. If we take the case of a text file - and this is the reason why, in one embodiment of the invention, identification of the file type is performed - then if we take a 64-byte window of the text data, it has been found that we could expect to find, on average, 26 symbols which are not the same. This would constitute an average entropy for textual data. Its entropy would be well below that for a random sequence of characters plus symbols, as textual data can be considered as structured data while encrypted data is not. When operated on by a high-entropy encryption key, it has been found that a window of the same size could include round about 58 different byte values. Thus, for a window or chunk size of 64 bytes, if we were to set a threshold of around 50 for the number of different symbols, we could determine, with a reasonable degree of certitudes, whether text has been encrypted or not. It can be noted that compression, unlike encryption, has little effect on data entropy.

According to an embodiment, the entropy is measured in real-time only on the data read from the file by the process A. The process A may read only some parts of the file, but not the whole file. The entropy is calculated on chunks of data but not necessarily on chunks of data of the same size. The difference between the instant entropy of the data read and the entropy of the written data can be considered as a time series, the method may check if the values of the entropy crosses a threshold and stay above for a certain predetermined time.

A file type identified as being that for an image would show a different structure for its data and would include portions which are monotonic where successive byte values only increase or decrease in value slightly. Encryption of an image file would alter its entropy, and the presence of encryption could be identified with a reasonable degree of certainty in a similar manner.

Entropy H for binary data is frequently expressed as Shannon entropy, due to C. E. Shannon, in "A Mathematical Theory of Communication", Bell System Technical Journal, vol. 27, pp. 379-423, 623-656, July, October, 1948, as

$$H = -\sum_{i=0}^{n} Pi \, log2(Pi)$$

wherein Pi is the probability for each character to appear, respectively, in the first set of data values and in the second set of data values and n is the number of characters which are possible.

For instance, for 8 bits characters, Shannon's entropy is given by:

$$H = -\sum_{i=0}^{255} Pi \, log2(Pi),$$

where n = 2^8 - 1 = 256 - 1 = 255, giving a value for entropy with units in "bits."

To take an example, if a bit sequence were to be 11011001, the frequencies of the symbols is 0.375 for the "0s and 0.625 for the "Is". Shannon entropy H can be calculated as follows:

$$H = -[(0.375log_2 0.375)+(0.625log_2 0.625)]$$
$$H = -[(-0.531)+(-0.424)]$$
$$H = -[-0.95443]$$

It can be seen that nearly every different bit sequence would give a different value for Shannon entropy.

As discussed above, the entropy is measured in real-time only on the data read from the file by the process A. It therefore requires a chunk of data which has preferably a variable size ; the entropy can therefore be calculated from the size of the data returned by the process A. It enables the entropy to be calculated in real-time, even if the process A reads only some parts of the file, but not the whole file.

A less advantageous alternative consists in moving a fixed-size sliding window over the relevant file while in volatile memory, to obtain the first and second magnitudes. A typical fixed window size, or size of each chunk of data, would be 64 bytes.

Once these magnitudes have been obtained, the third module 3 compares the first magnitude and said second magnitude. The third module 3 is configured to analyze the randomness of a file between the file of the file system accessed as input by the process A and the same file ready to be written to disk by process A, but still in volatile memory. From such a comparison, it is therefore possible to discover signs in the second set of data values which are typical for a ransomware process that interfere with the operating system. During operation, the third module 3 interacts with the second module 2 to collect the measurements of the first state and second state of the file system. Such third module 3 enables the system to characterize whether the process A is or is not a ransomware process. Based on the result of the comparison between the first magnitude and the second magnitude, the fourth module 4 interrupts said process A if said second magnitude exceeds said first magnitude by a given threshold (using a threshold allows for small differences in values which could not result from ransomware, and prevents false positives). The monitoring is agnostic to whether the same file is read and written. When there is one file open for reading and, then, one file open for writing, both are associated for measurement comparison. This is the case when the process is encrypting the files individually and sequentially. There is also the where multiple files are open for reading at the same time and only one file is open for writing. In this case, the set of files opened for reading are treated as a single pool..

According to an embodiment, the third module 3 may further check whether the size of the file of the file system being in the first state is substantially equal to the size of the file when it is in the second state. Indeed, when a file is being encrypted, the size (not the entropy) of the file being in the second state is very close to the size of the file being in the first state. In other words, when a file is being encrypted, the size of the set of data written is very close to the size of the set of data read. It may be important to characterize the size of the data in order to prevent the system from interrupting the process A as being malware if it is only a process which is performing some sort of compression (which does alter file size, but not entropy to any significant extent) or, indeed, legitimate encryption. This is why, as discussed below, the user is asked whether he or she has authorized encryption.

As said, the method preferably includes a step of determining the file type of the file under consideration. File type should be able to identify whether a file is a compressed file. As file compression only generally strips redundant values from the file, its entropy will change little between the uncompressed and compressed file. Compressed files may obviously also be encrypted. What concerns us here however, is what influence process A has on the file, and whether or not this is legitimate.

According to another embodiment, the third module 3 may further determine whether a time interval between the access to the file of the file system being in the first state and the end of processing of the file by the process A to be in the second state is relatively high. In other words, the time interval is determined between reading the first set of data and writing the second set of data. As encryption which the user has not given his or her consent to can take some time, then if this time interval is high, this can make process A even more suspicious. A threshold above which the interval become an indicated of suspiciousness can be determined depending on the process characteristics, the CPU speed and the system charge.

The fourth module 4 leverages the existing capabilities of the operating system to pause the process A that is suspicious.

Then, according to the embodiment shown in figure 1, the system comprises a fifth module 5 which enables the system to:

- inform the end-user of the computer system that process A has been paused,
- ask the end-user if encryption has been initiated at the initiative of the user,
- collect a response from the end-user.

The request may be made via the operating system that only informs the end-user that there is a suspicious process A in the operating system which is encrypting one (or several) file(s), without stating specifically what application represents that ransomware process (assuming the invention can monitor several processes). Thus, this fifth module 5 can help to check if the system according to the invention may have provided a false positive by interpreting a legitimate process as a ransomware process A. If the end-user answers positively to the request made by the system, i.e. the legitimacy of encryption is confirmed, the system will unpause via a sixth module 6 process A and process A can keep running on the operating system. If the end-user answers negatively to the request made by the system, the system can conclude via a decision-making module (not illustrated) that an active ransomware program is present in the operating system.

In case of detection of active ransomware processes, the sixth module 6 unpauses the process A and a seventh module 7 and a eighth module 8 are triggered in order to, respectively, dump the content of the volatile memory in which evidence of process A is stored and allowing cryptanalysis to be performed in order to attempt to extract the encryption key from the dumped volatile memory. Finally, a ninth module 9 terminates the process A.

If the end-user's response has been in the negative, the process A is unpaused and the volatile memory data can be examined in order to try and determine the crypto algorithm which has been used. This involves examining the running code for indices of crypto algorithms (these are typically S-Boxes, known constants, etc) and attempting to determine the encryption key(s) in the process memory using the pattern of key schedules (the round keys). As said, the crypto algorithm may be deduced from the encryption key(s) which is/are contained in the volatile memory. In order to recover the initial state of the file, corresponding to the first state of the file, it is necessary to recover the encryption key(s). The encryption key(s) are in the process memory for said process A which is/are still stored in volatile memory. This enables the encryption key(s) in the process memory to be determined by using the pattern of encryption keys. The key for each round of the encryption process is included in the key schedule of the master key. These operations are performed by cryptanalysis methods.

According to an embodiment, the encryption keys are saved in the eight module 8 which is adapted to store data. It is therefore possible to recover the initial file by finding the master key via the encryption keys, and using this to decrypt the file. Recovering of the initial file can be done once the process A is blocked by the ninth module 9.

The invention also provides a method for protection against ransomware in a computer system. The method comprises the following steps :

- monitoring the access of a running process A to each file of a file system, said file being in a first state in which said file is accessed as input by the process A and in a second state in which said file is processed by the process A as output, the first state of the file of the file system being associated with a first set of data values and the second state of the file of the file system being associated with a second set of data values,
- measuring a first magnitude representative of the randomness of said first set of data values and a second magnitude representative of the randomness of said second set of data values,
- comparing said first magnitude and said second magnitude,
- interrupting said process A if said second magnitude exceeds said first magnitude by a given threshold value.

According to an embodiment, the method further comprises a step of checking whether the size of the file of the file system being in the first state is substantially equal to the size of the file of the file system being in the second state.

According to an embodiment, the method further comprises a step of determining whether a time interval between accessing the file of the file system being in the first state and the processing of the file of the file system by the process A to be in the second state is relatively high.

According to an embodiment, the step of monitoring is updated so as to receive constantly changing data relative to the access of the process A to the file of the file system or to the second file system.

According to an embodiment, the method comprises the following step:

- sending a message to the end-user of the computer system indicating that a process has been paused as a result of encryption being performed by said process on data in a file,
- asking the end-user if encryption has been initiated at the initiative of the user,
- collecting a response from the end-user.

According to an embodiment, the method comprises the following steps :

- unpausing the process if said response is negative,
- examining the second set of data values in order to determine the crypto algorithm which has been used,
- extracting the encryption keys from the process memory which is still stored in the volatile memory by using the pattern of encryption keys.

**Claims**

1.  A method for real time protection against unsolicited encryption of computer files in a computer system, the method comprising the following steps:

    - monitoring each access of a running process (A) to a file of a file system of the computer system, said file being in a first state in which said file is accessed as input by the process and in a second state in which said file is processed by the process as output, the first state of the file of said file system being associated with a first set of data values and the second state of the file of the file system being associated with a second set of data values,
- measuring, while said data values are still in volatile memory, a first magnitude representative of the randomness of said first set of data values and a second magnitude representative of the randomness of said second set of data values,
- comparing said first magnitude and said second magnitude, and
- interrupting said process if said second magnitude exceeds said first magnitude by a given threshold value,
- requesting to an end-user an explicit acknowledgement of the legitimacy or not of the encryption,
- if the encryption is not legitimate, automatically dumping the volatile memory data looking for respectively indices of crypto algorithm used and encryption keys in the volatile memory using the pattern of key schedules; then storing of the indices and encryption keys.

2.  The method according to claim 1 in which the unsolicited encryption of computer files in the computer system is a result of ransomware operating in said computer system.

3.  The method according to claim 1 or 2, further comprising a step of checking whether a size of the file of the file system being in the first state is substantially equal to a size of the file of the file system being in the second state.

4.  The method according to any of the preceding claims, further comprising a step of determining whether a time interval between access to the file of the file system being in the first state and processing of the file of the file system by the process (A) to be in the second state is above a determined threshold.

5.  The method according to any of the preceding claims, wherein the first magnitude and the second magnitude are measured through an entropy calculation such as measurement of Shannon entropy given by: $\sum_{i=0}^{n} Pi\ log2(Pi),$ wherein Pi is the probability for each character to appear, respectively, in the first set of data values and in the second set of data values and n is the number of characters which is possible.

6.  The method according to any of the preceding claims, including a step of determining the file type of the file which the process is accessing.

7.  The method according to any of the preceding claims, wherein the step of monitoring is updated so as to receive constantly changing data relative to the access of the process (A) to the file of the file system or to a second file system.

8.  The method according to any of the preceding claims, in which, if said process (A) has been interrupted, the method includes:

    - sending a message to the end-user of the computer system indicating that said process (A) has been paused,
    - asking the end-user if encryption has been initiated at the initiative of the user, and collecting a response from the end-user.

9.  The method according to claim 8, comprising the step of unpausing the process if said response is negative.

10. The method according to claim 9, comprising the step of recovering the initial file via the encryption keys.

11. The method according to any of the preceding claims, wherein:

    - the first state of the file of the file system corresponds to the first set of data from which the process (A) reads,
    - the second state of the file of the file system corresponds to the second set of data which is written by the process (A).

12. A computer program product comprising computer-executable instructions for performing a method according to any of the claims 1 to 11.

13. A computer readable medium having a computer program comprising program instructions, the computer program being loadable into a data-processing unit and adapted to cause execution of the method according to any of the claims 1 to 11 when the computer program is run by the data-processing unit.

14. A system for real time protection against unsolicited encryption of computer files in a computer system comprising computing hardware, an operating system executable on the computing hardware and comprising modules stored on a computer readable medium comprising:

- a first module (1) for monitoring an access of a running process to a file of a file system, said file of a file system being adapted to be in a first state in which said file is accessed as input by the process (A) and in a second state in which said file is processed by the process (A) as output, the first state of the file of the file system being associated with a first set of data values and the second state of the file of the file system being associated with a second set of data values,
- a second module (2) for measuring a first magnitude representative of the randomness of said first set of data values and a second magnitude representative of the randomness of said second set of data values,
- a third module (3) for comparing said first magnitude and said second magnitude,
- a fourth module (4) for interrupting said process (A) if said second magnitude is higher than said first magnitude.

15. The system according to claim 14 in which the unsolicited encryption of computer files in the computer system is a result of ransomware operating in said computer system.

16. The system according to one of claims 14 to 15, wherein the third module (3) is adapted to check whether a size of the file of the file system being in the first state is substantially equal to a size of the file of the file system being in the second state.

17. The system according to any one of the preceding claims, wherein the third module (3) is adapted to determine whether a time interval between access to the file of the file system being in the first state and processing of the file of the file system by the process (A) to be in the second state is above a determined threshold.

**Patentansprüche**

1. Verfahren zum Echtzeitschutz gegen unaufgeforderte Verschlüsselung von Computerdateien in einem Computersystem, wobei das Verfahren die folgenden Schritte umfasst:

- Überwachen jedes Zugriffs eines laufenden Prozesses (A) auf eine Datei eines Dateisystems des Computersystems, wobei sich die Datei in einem ersten Zustand, in dem auf die Datei als Eingabe durch den Prozess zugegriffen wird, und in einem zweiten Zustand befindet, in dem die Datei durch den Prozess als Ausgabe verarbeitet wird, wobei der erste Zustand der Datei des Dateisystems mit einer ersten Menge von Datenwerten verknüpft ist und der zweite Zustand der Datei des Dateisystems mit einer zweiten Menge von Datenwerten verknüpft ist,
- Messen, während sich die Datenwerte noch im flüchtigen Speicher befinden, einer ersten Größenordnung, die für die Zufälligkeit der ersten Menge von Datenwerten repräsentativ ist, und einer zweiten Größenordnung, die für die Zufälligkeit der zweiten Menge von Datenwerten repräsentativ ist,
- Vergleichen der ersten Größe und der zweiten Größenordnung, und
- Unterbrechen des Prozesses, wenn die zweite Größenordnung die erste Größenordnung um einen vorgegebenen Schwellenwert überschreitet,
- Anfordern einer ausdrücklichen Bestätigung der Rechtmäßigkeit oder Nicht-Rechtmäßigkeit der Verschlüsselung von einem Endbenutzer,
- wenn die Verschlüsselung nicht rechtmäßig ist, automatisches Auslesen der Daten des flüchtigen Speichers und Suchen nach Indizes des verwendeten Kryptoalgorithmus bzw. nach Verschlüsselungsschlüsseln im flüchtigen Speicher unter Verwendung des Musters von Schlüsselplänen; anschließend Speichern der Indizes und Verschlüsselungsschlüssel.

2. Verfahren nach Anspruch 1, wobei die unaufgeforderte Verschlüsselung von Computerdateien im Computersystem eine Folge von Ransomware ist, die in dem Computersystem läuft.

3. Verfahren nach Anspruch 1 oder 2, ferner umfassend einen Schritt des Prüfens, ob eine Größe der Datei des Dateisystems, die sich im ersten Zustand befindet, im Wesentlichen gleich einer Größe der Datei des Dateisystems ist, die sich im zweiten Zustand befindet.

4. Verfahren nach einem der vorhergehenden Ansprüche, ferner umfassend einen Schritt des Bestimmens, ob ein Zeitintervall zwischen dem Zugriff auf die Datei des Dateisystems, die sich im ersten Zustand befindet, und der Verarbeitung der Datei des Dateisystems durch den Prozess (A), um im zweiten Zustand zu sein, über einem bestimmten Schwellenwert liegt.

5. Verfahren nach einem der vorhergehenden Ansprüche, wobei die erste Größenordnung und die zweite Größenordnung mittels einer Entropieberechnung, wie z. B. der Messung der Shannon-Entropie gemessen werden, die gegeben ist durch: $\sum_{i=0}^{n} Pi\, log2(Pi)$, wobei Pi die Wahrscheinlichkeit ist, dass jedes Zeichen in der ersten Menge von Datenwerten bzw. in der zweiten Menge von Datenwerten erscheint, und n die Anzahl der möglichen Zeichen ist.

6. Verfahren nach einem der vorhergehenden Ansprüche, einschließlich eines Schritts des Bestimmens des Dateityps der Datei, auf die der Prozess zugreift.

7. Verfahren nach einem der vorhergehenden Ansprüche, wobei der Schritt des Überwachens aktualisiert wird, um sich ständig ändernde Daten bezüglich des Zugriffs des Prozesses (A) auf die Datei des Dateisystems oder auf ein zweites Dateisystem zu empfangen.

8. Verfahren nach einem der vorhergehenden Ansprüche, wobei, wenn der Prozess (A) unterbrochen wurde, das Verfahren umfasst:

   - Senden einer Nachricht an den Endbenutzer des Computersystems, die angibt, dass der Prozess (A) pausiert wurde,
   - Fragen des Endbenutzers, ob die Verschlüsselung auf Initiative des Benutzers eingeleitet wurde, und Erfassen einer Antwort vom Endbenutzer.

9. Verfahren nach Anspruch 8, umfassend den Schritt des Aufhebens des Pausierens des Prozesses, wenn die Antwort negativ ist.

10. Verfahren nach Anspruch 9, umfassend den Schritt des Wiederherstellens der anfänglichen Datei über die Verschlüsselungsschlüssel.

11. Verfahren nach einem der vorhergehenden Ansprüche, wobei:

    - der erste Zustand der Datei des Dateisystems der ersten Datenmenge entspricht, aus der der Prozess (A) liest,
    - der zweite Zustand der Datei des Dateisystems der zweiten Datenmenge entspricht, die durch den Prozess geschrieben wird (A).

12. Computerprogrammprodukt mit computerausführbaren Anweisungen zum Durchführen eines Verfahrens nach einem der Ansprüche 1 bis 11.

13. Computerlesbares Medium mit einem Computerprogramm, das Programmanweisungen enthält, wobei das Computerprogramm in eine Datenverarbeitungseinheit ladbar ist und dazu angepasst ist, die Ausführung des Verfahrens nach einem der Ansprüche 1 bis 11 zu bewirken, wenn das Computerprogramm durch die Datenverarbeitungseinheit ausgeführt wird.

14. System zum Echtzeitschutz gegen unaufgeforderte Verschlüsselung von Computerdateien in einem Computersystem, das Computerhardware, ein auf der Computerhardware ausführbares Betriebssystem und auf einem computerlesbaren Medium gespeicherte Module umfasst, umfassend:

    - ein erstes Modul (1) zum Überwachen eines Zugriffs eines laufenden Prozesses auf eine Datei eines Dateisystems, wobei die Datei eines Dateisystems dazu angepasst ist, sich in einem ersten Zustand, in dem auf die Datei als Eingabe durch den Prozess (A) zugegriffen wird, und in einem zweiten Zustand zu befinden, in dem die Datei durch den Prozess (A) als Ausgabe verarbeitet wird, wobei der erste Zustand der Datei des Dateisystems mit einer ersten Menge von Datenwerten verknüpft ist und der zweite Zustand der Datei des Dateisystems mit einer zweiten Menge von Datenwerten verknüpft ist,
    - ein zweites Modul (2) zum Messen einer ersten Größenordnung, die repräsentativ für die Zufälligkeit der ersten Menge von Datenwerten ist, und einer zweiten Größenordnung, die repräsentativ für die Zufälligkeit der zweiten Menge von Datenwerten ist,

- ein drittes Modul (3) zum Vergleichen der ersten Größenordnung und der zweiten Größenordnung,
- ein viertes Modul (4) zum Unterbrechen des Prozesses (A), wenn die zweite Größenordnung höher als die erste Größenordnung ist.

**15.** System nach Anspruch 14, wobei die unaufgeforderte Verschlüsselung von Computerdateien im Computersystem eine Folge von Ransomware ist, die in dem Computersystem läuft.

**16.** System nach einem der Ansprüche 14 bis 15, wobei das dritte Modul (3) dazu angepasst ist, zu prüfen, ob eine Größe der Datei des Dateisystems, das sich im ersten Zustand befindet, im Wesentlichen gleich einer Größe der Datei des Dateisystems ist, das sich im zweiten Zustand befindet.

**17.** System nach einem der vorhergehenden Ansprüche, wobei das dritte Modul (3) dazu angepasst ist, zu bestimmen, ob ein Zeitintervall zwischen dem Zugriff auf die Datei des Dateisystems, die sich im ersten Zustand befindet, und der Verarbeitung der Datei des Dateisystems durch den Prozess (A), die sich im zweiten Zustand befinden soll, über einem bestimmten Schwellenwert liegt.

## Revendications

**1.** Procédé de protection en temps réel contre le cryptage non sollicité de fichiers informatiques dans un système informatique, le procédé comprenant les étapes de :

surveillance de chaque accès d'un processus en cours d'exécution (A) à un fichier d'un système de fichiers du système informatique, ledit fichier étant dans un premier état dans lequel ledit fichier fait l'objet d'un accès en tant qu'entrée par le processus et dans un second état dans lequel ledit fichier est traité par le processus en tant que sortie, le premier état du fichier dudit système de fichiers étant associé à un premier ensemble de valeurs de données et le second état du fichier du système de fichiers étant associé à un second ensemble de valeurs de données,
mesure, tandis que lesdites valeurs de données sont encore dans une mémoire volatile, d'une première amplitude représentant le caractère aléatoire dudit premier ensemble de valeurs de données et d'une seconde amplitude représentant le caractère aléatoire dudit second ensemble de valeurs de données,
comparaison de ladite première amplitude avec ladite seconde amplitude, et
interruption dudit processus si ladite seconde amplitude dépasse ladite première amplitude d'une valeur seuil donnée,
demande à un utilisateur final d'une reconnaissance explicite de la légitimité ou non du cryptage,
si le cryptage n'est pas légitime, vidage automatique des données de la mémoire volatile en recherchant respectivement des indices de l'algorithme de cryptage utilisé et de clés de cryptage dans la mémoire volatile en utilisant le schéma des programmations de clé ; puis stockage des indices et des clés de cryptage.

**2.** Procédé selon la revendication 1, le cryptage non sollicité de fichiers informatiques dans le système informatique étant le résultat d'un ransomware fonctionnant dans ledit système informatique.

**3.** Procédé selon la revendication 1 ou 2, comprenant en outre une étape de vérification pour savoir si une taille du fichier du système de fichiers se trouvant dans le premier état est sensiblement égale à une taille du fichier du système de fichiers se trouvant dans le second état.

**4.** Procédé selon l'une quelconque des revendications précédentes, comprenant en outre une étape de détermination du fait qu'un intervalle de temps entre l'accès au fichier du système de fichiers se trouvant dans le premier état et le traitement du fichier du système de fichiers par le processus (A) devant se trouver dans le second état est supérieur à un seuil déterminé.

**5.** Procédé selon l'une quelconque des revendications précédentes, la première amplitude et la seconde amplitude étant mesurées par un calcul d'entropie tel que la mesure de l'entropie de Shannon donnée par :

$$\sum_{i=0}^{n} Pi\, log2(Pi),$$

Pi étant la probabilité pour chaque caractère d'apparaître, respectivement, dans le premier ensemble de valeurs de données et dans le second ensemble de valeurs de données, et n étant le nombre de caractères qui est possible.

**6.** Procédé selon l'une quelconque des revendications précédentes, comprenant une étape de détermination du type de fichier auquel le processus accède.

**7.** Procédé selon l'une quelconque des revendications précédentes, l'étape de surveillance étant mise à jour de manière à recevoir des données à modification constante par rapport à l'accès du processus (A) au fichier du système de fichiers ou à un second système de fichiers.

**8.** Procédé selon l'une quelconque des revendications précédentes, dans lequel, si ledit processus (A) a été interrompu, le procédé comprend :

- l'envoi d'un message à l'utilisateur final du système informatique indiquant que ledit processus (A) a été interrompu,
- la demande à l'utilisateur final si le cryptage a été initié à l'initiative de l'utilisateur, et la collecte d'une réponse provenant de l'utilisateur final.

**9.** Procédé selon la revendication 8, comprenant l'étape de mise en pause du processus si ladite réponse est négative.

**10.** Procédé selon la revendication 9, comprenant l'étape de récupération du fichier initial par l'intermédiaire des clés de cryptage.

**11.** Procédé selon l'une quelconque des revendications précédentes,

- le premier état du fichier du système de fichiers correspondant au premier ensemble de données à partir duquel le processus (A) lit,
- le second état du fichier du système de fichiers correspondant au second ensemble de données qui est écrit par le processus (A).

**12.** Produit de programme informatique comprenant des instructions exécutables par ordinateur pour réaliser un procédé selon l'une quelconque des revendications 1 à 11.

**13.** Support lisible par ordinateur ayant un programme informatique comprenant des instructions de programme, le programme informatique pouvant être chargé dans une unité de traitement de données et adapté pour provoquer l'exécution du procédé selon l'une quelconque des revendications 1 à 11 lorsque le programme informatique est exécuté par l'unité de traitement de données.

**14.** Système de protection en temps réel contre le cryptage non sollicité de fichiers informatiques dans un système informatique comprenant un matériel informatique, un système d'exploitation exécutable sur le matériel informatique et comprenant des modules stockés sur un support lisible par ordinateur comprenant :

- un premier module (1) pour surveiller un accès d'un processus en cours d'exécution à un fichier d'un système de fichiers, ledit fichier d'un système de fichiers étant adapté pour être dans un premier état dans lequel ledit fichier est accédé en tant qu'entrée par le processus (A) et dans un second état dans lequel ledit fichier est traité par le processus (A) en tant que sortie, le premier état du fichier du système de fichiers étant associé à un premier ensemble de valeurs de données et le second état du fichier du système de fichiers étant associé à un second ensemble de valeurs de données,
- un deuxième module (2) pour mesurer une première amplitude représentant le caractère aléatoire dudit premier ensemble de valeurs de données et une seconde amplitude représentant le caractère aléatoire dudit second ensemble de valeurs de données,
- un troisième module (3) pour comparer ladite première amplitude avec ladite seconde amplitude,
- un quatrième module (4) pour interrompre ledit processus (A) si ladite seconde amplitude est supérieure à ladite première amplitude.

**15.** Système selon la revendication 14, le cryptage non sollicité de fichiers informatiques dans le système informatique étant le résultat d'un ransomware fonctionnant dans ledit système informatique.

**16.** Système selon l'une des revendications 14 à 15, le troisième module (3) étant adapté pour vérifier si une taille du fichier du système de fichiers se trouvant dans le premier état est sensiblement égale à une taille du fichier du système de fichiers se trouvant dans le second état.

**17.** Système selon l'une quelconque des revendications précédentes, le troisième module (3) étant adapté pour déterminer si un intervalle de temps entre l'accès au fichier du système de fichiers se trouvant dans le premier état et le traitement du fichier du système de fichiers par le processus (A) devant se trouver dans le second état est supérieur à un seuil déterminé.

Application
processes

Process A

Input File

Output File

2
Measurements
of the input files

1
Monitor process
accesses to files

2'
Measurements
of the output
files

3
Check
measurements

4
Interrupt the
process

5
Request action
from the end
user

6
Unpause the
process

7
Dump the
memory for
decryption keys

8
Extract and
store the
decryption keys

9
Block the
process

OS and storage

Figure 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **GRÖBERT F. et al.** Automated Identification of Cryptographic Primitives in Binary Programs. *Recent Advances in Intrusion Detection. (RAID,* 2011
- Lecture Notes in Computer Science. Spinger, vol. 6961
- **C. E. SHANNON.** A Mathematical Theory of Communication. *Bell System Technical Journal,* July 1948, vol. 27, 379-423, 623-656